# EUROPÄISCHE PATENTSCHRIFT

(11) **EP 0 321 681 B1**
(45) Veröffentlichungstag und Bekanntmachung des Hinweises auf die Patenterteilung: **29.12.1993**
(21) Anmeldenummer: 88118095.4
(22) Anmeldetag: 31.10.1988
(51) Int. Cl.: H04N 5/44, H04N 5/60

(54) **Fernsehempfangsteil mit digital arbeitenden Stufen**
TV receiver unit with digitally operating stages
Partie d'un téléviseur avec des étages opérant numériquement

(30) Priorität: 23.12.1987 DE 3743727
(43) Veröffentlichungstag der Anmeldung: 28.06.1989
(73) Patentinhaber: Deutsche ITT Industries GmbH, 79108 Freiburg (DE)
(72) Erfinder: Mehrgardt, Sönke, Dr., D-7806 March (DE); Ehrhardt, Dietmar, Dr., D-7800 Freiburg (DE)

(56) Entgegenhaltungen:
- EP-A- 0 204 849
- EP-A- 0 237 590
- US-A- 4 502 078

## Beschreibung

Bei den heute üblichen sogenannten digitalen Fernsehempfängern sind im allgemeinen mindestens zwei A/D-Wandler (= Analog/Digital-Wandler) vorgesehen. Der eine dient zur A/D-Wandlung des Videosignals und ist üblicherweise hinter der sogenannten Tonfalle angeordnet, mit der das Tonträgersignal aus dem übrigen Signal unterdrückt wird. Dieser A/D-Wandler wird an einem Abtastsignal betrieben, dessen Frequenz meist das Vierfache der Farbträgerfrequenz ist.

Der andere A/D-Wandler ist zu Beginn des Audiokanals angeordnet und ist im Gegensatz zum oben erwähnten, der ein Flash-A/D-Wandler ist, meist ein Delta-Sigma-A/D-Wandler.

Bei der Weiterentwicklung und Verfeinerung des heute üblichen Prinzips eines digitalen Fernsehempfängers hat sich gezeigt, daß für jede der verschiedenen heute üblichen, aber auch für die zukünftig zu erwartenden Fernsehstandards entsprechend zugeschnittene und dimensionierte Teilschaltungen erforderlich sind, die zu einer Vielzahl verschiedener Typen von integrierten Schaltungen führen. Dies ist insbesondere im Hinblick auf die Massenfertigung von integrierten Schaltungen ungünstig.

Der in den Patentansprüchen definierten Erfindung liegt daher die Aufgabe zugrunde, ein Schaltungsprinzip für Fernsehempfangsteile mit mindestens einer Schnittstelle zwischen analoger und digitaler Signalverarbeitung anzugeben, das eine wesentlich einfachere Anpassung an unterschiedliche Fernsehstandards erlaubt und bei dem der Aufwand an A/D-Wandlern reduziert ist.

Aus US-A-4 502 078 ist bekannt schon am Ausgang der Zwischenfrequenzstufe, also dort, wo das noch analoge Signal in einem Frequenzbereich zwischen ca. 30 MHz und 40 MHz liegt, einen einzigen A/D-Wandler einzusetzen, dessen Taktsignal eine Frequenz hat, die etwa gleich dem Doppelten der Bandbreite des empfangenen Signals ist, also z.B. eine Frequenz. von etwa 20 MHz . Hinter diesem A/D-Wandler erfolgt die Aufteilung in einen die Videoinformation verarbeitenden Kanal, den Videokanal, und in einen die Audioinformation verarbeitenden Kanal, den Audiokanal. Gegenüber der bisher üblichen und oben geschilderten Lösung kann somit der separate Audiokanal-A/D-Wandler entfallen, was bei einem gegenwärtig marktgängigen System die Einsparung einer ganzen integrierten Schaltung bedeutet.

Die Aufgabe wird durch die im kennzeichnenden Teil des Anspruchs 1 angegebenen Merkmale gelöst.

Die Erfindung wird nun anhand der Figuren der Zeichnung näher erläutert.
Fig. 1 zeigt schematisch das Blockschaltbild eines Ausführungsbeispiels der Erfindung,
Fig. 2 zeigt schematisch ausschnittsweise das Blockschaltbild einer vorteilhaften Weiterbildung und
Fig. 3 zeigt schematisch ausschnittsweise das Blockschaltbild einer weiteren Weiterbildung der Erfindung.

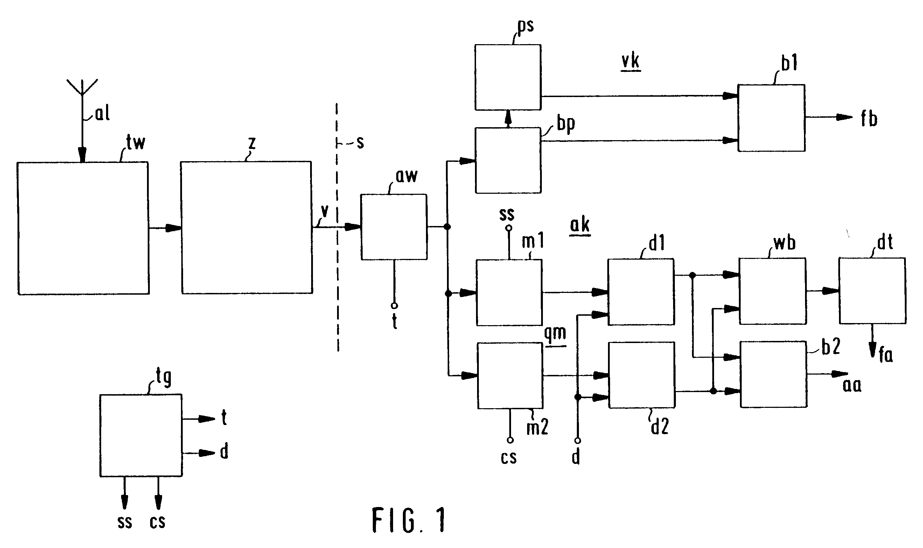

Die Fig. 1 zeigt denjenigen Teil eines Fernsehempfängers oder eines Videorecorders, der von der Erfindung betroffen ist und der als Fernsehempfangsteil bezeichnet ist. Wie üblich ist das Antennensignal al dem in irgendeiner bekannten und üblichen Technik realisierten Tuner und Mischer tw mit nachgeschalteter Zwischenfrequenzstufe z zugeführt, an deren Ausgang das die Video- und die Audio-Information enthaltende Signal v wie erwähnt in Zwischenfrequenzlage auftritt. Dieses wird mittels des einzigen A/D-Wandlers aw, dessen Taktsignal t eine Frequenz von etwa 20 MHz hat, in ein Digitalsignal überführt, dessen Frequenzband zwischen etwa 1 MHz und 9 MHz liegt. Das Taktsignal t wird vom Taktgenerator tg erzeugt. Es liegt somit nur die einzige Schnittstelle s zwischen analoger und digitaler Verarbeitung vor.

Das Ausgangssignal des A/D-Wandlers aw speist den Videoinformation-Verarbeitungskanal vk, kurz Videokanal genannt, und den Audioinformation-Verarbeitungskanal ak, kurz Audiokanal genannt. Der Videokanal vk enthält eingangsseitig den Bandpaß bp, dessen Durchlaßband zwischen 1 MHz und 6 MHz liegt und der einerseits direkt und andererseits über den 90°-Phasenschieber ps die aus ihren beiden Eingangssignalen den Betrag bildende erste Stufe b1, kurz erster Betragsbildner genannt, speist. An deren Ausgang tritt das digitale Farb-Bild-Austast-Synchron-Signalgemisch fb, also kurz das digitale FBAS-Signal, auf.

Der Audiokanal ak enthält eingangsseitig den Quadraturmischer qm, bei dem die beiden Mischsignale dieselbe fernsehstandard-abhängige feste Frequenz, die zwischen 7 MHz und 7,5 MHz liegt, haben und der aus den beiden gezeigten Multiplizierern m1, m2 besteht, wobei dem einen das digitale Sinussignal ss und dem anderen das digitale Cosinussignal cs zugeführt sind, die ebenfalls vom Taktgenerator tg erzeugt werden.

Jedes der beiden Ausgangssignale des Quadraturmischers qm ist mittels eines der beiden Dezimierer d1, d2 von der eingangsseitigen hohen Frequenz des Taktsignals t auf die zur Weiterverarbeitung geeignete niedrigere Frequenz des Abtastsignals d umgesetzt, das aus dem Taktgenerator tg stammt.

Der jeweilige Ausgang der beiden Dezimierer d1, d2 führt zu den beiden Eingängen der aus ihren Eingangssignalen den Betrag bildenden zweiten Stufe b2, kurz zweiter Betragsbildner genannt, und zu den beiden Eingängen der aus ihren Eingangssignalen den dazwischen auftretenden Winkel bildenden Stufe wb, kurz Winkelbildner genannt.

Dem Winkelbildner wb ist die Differenzierstufe dt nachgeschaltet, an deren Ausgang das frequenzdemodulierte Audiosignal fa abnehmbar ist, wenn ein solches empfangen wird. Am Ausgang des zweiten Betragsbildners b2 ist das amplitudendemodulierte Audiosignal aa abnehmbar, wenn ein solches empfangen wird. Bei Standards mit mehr als einem Tonträger ist der Audiokanal ak entsprechend mehrfach vorzusehen. Die beiden Betragsbildner b1, b2 und der Winkelbildner wb sind bevorzugt Schaltungen, die nach der CORDIC-Technik arbeiten, vgl. "IRE Transaction on Electronic Computers", 1959, Seiten 330 bis 334.

Die weiteren auf die beiden Betragsbildner b1, b2 bzw. die Differenzierstufe dt folgenden Schaltungen sind von für die digitale Signalverarbeitung in Fernsehempfangsteilen üblicher Art.

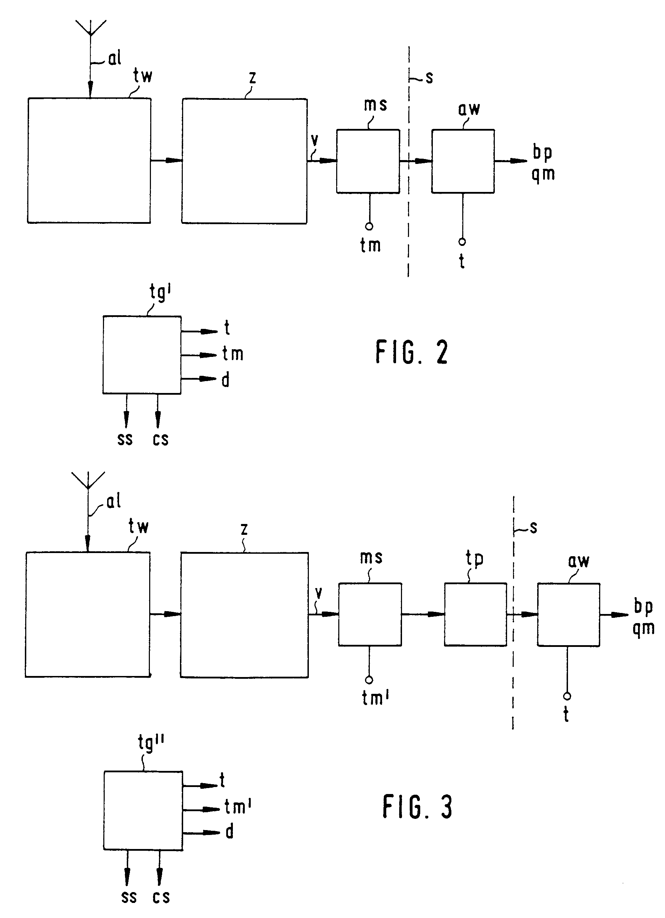

In Fig. 2 ist eine vorteilhafte Weiterbildung der Anordnung nach Fig. 1 für den Fall gezeigt, daß die Frequenzen am Ausgang der Zwischenfrequenzstufe z wesentlich höher sind als die Frequenz des Taktsignals t des A/D-Wandlers aw. Da in diesem Fall sehr hohe Anforderungen an dessen Genauigkeit gestellt werden, weil zeitliche Schwankungen des Sample-Zeitpunkts, das sogenannte Aperturjittern, zu nicht korrigierbaren Verzerrungen des A/D-gewandelten Signals führen, ist zwischen dem Ausgang der Zwischenfrequenzstufe z und dem Eingang des A/D-Wandlers aw die Mischstufe ms vorgesehen, der das Mischsignal tm zugeführt ist, dessen Frequenz ein ganzzahliges Vielfaches der Frequenz des Taktsignals t ist.

Durch die letztgenannte Maßnahme läßt sich erreichen, daß es bei der A/D-Wandlung nicht zu Aliasing-Effekten kommt. In Fig. 2 erzeugt der Taktgenerator tg′ auch das Mischsignal tm.

In Fig. 3 ist eine Weiterbildung der Anordnung nach Fig. 2 für den Fall gezeigt, daß das Signal am Ausgang der Zwischenfrequenzstufe z (schon) ein bandbegrenztes Signal ist. Dann kann das Mischsignal tm nach Fig. 2 vorteilhaft das Rechtecksignal tm′ entsprechend Fig. 3 sein, aus dem zweckmäßigerweise durch Frequenzteilung das Taktsignal t gewonnen wird. Der Taktgenerator tg′′ von Fig. 3 enthält in diesem Fall eine Frequenzteilerschaltung.

Fig. 3 zeigt ferner, daß es zweckmäßig sein kann, zwischen der Mischstufe ms und dem A/D-Wandler aw das Tiefpaßfilter tp anzuordnen, mit dem höherfrequente Signalanteile am Ausgang der Mischstufe ms unterdrückbar sind. Die Grenzfrequenz des Tiefpaßfilters tp ist im Bedarfsfall entsprechend zu wählen.

Die Einstellung auf die verschiedenen Fernsehstandards und deren standardbedingte Zahlenwerte erfolgt bei der Erdindung ausschließlich auf der digitalen Seite der Signalverarbeitung und ist somit wesentlich leichter zu realisieren als bei den heute üblichen Fernsehempfangsteilen, wo die Anpassung an die standardbedingten Zahlenwerte zum Teil noch auf der Seite der analogen Signalverarbeitung erfolgen muß.

Die Erfindung wird bevorzugt mittels integrierter Schaltungen realisiert, wobei für die einzelnen Teile die am besten geeignete spezielle Technologie gewählt wird, und zwar sowohl was die reine Herstellungstechnologie des Halbleiterkristalls als auch die jeweilige prinzipielle Schaltungstechnik betrifft.

## Patentansprüche

1. Fernsehempfangsteil mit mindestens einer Schnittstelle zwischen analog und digital arbeitenden Stufen, mit folgenden Merkmalen:
- es ist eine einzige Schnittstelle (s) mit einem einzigen A/D-Wandler (aw) vorgesehen, die direkt nach dem Ausgang der üblichen Zwischenfrequenzstufe (z) des Fernsehempfangsteils angeordnet ist,
- das Taktsignal des A/D-Wandlers (aw) hat eine Frequenz, die ungefähr gleich dem Doppelten der Bandbreite des vom Fernsehempfangsteil empfangenen Signals ist,
- dessen Ausgangssignal speist einen Audioinformation-Verarbeitungskanal (= Audiokanal) (ak) und einen Videoinformation-Verarbeitungskanal (= Videokanal) (vk),
dadurch gekennzeichnet, daß
- der Videokanal eingangsseitig einen Bandpaß (bp) enthält, dessen Durchlaßband zwischen 1 MHz und 6 MHz liegt und der einerseits direkt und andererseits über einen 90°-Phasenschieber (ps) eine aus ihren beiden Eingangssignalen den Betrag bildende erste Stufe (= erster Betragsbildner) (b1) speist, an deren Ausgang das digitale FBAS-Signal (fb) auftritt, und
- der Audiokanal (ak) eingangsseitig einen Quadraturmischer (qm) enthält, bei dem die Mischsignale dieselbe fernsehstandard-abhängige feste Frequenz, die zwischen 7 und 7,5 MHz liegt, haben und bei dem jedes von dessen beiden Ausgangssignalen über einen Dezimierer (d1, d2) zu den beiden Eingängen einer aus ihren Eingangssignalen den Betrag bildenden zweiten Stufe (= zweiter Betragsbildner) (b2) und zu den beiden Eingängen eines aus ihren Eingangssignalen den dazwischen auftretenden Winkel bildenden Stufe (= Winkelbildner) (wb) geführt sind, wobei am Ausgang des Winkelbildners (wb) über eine Differenzierstufe (dt) das frequenzdemodulierte Audiosignal (af) abnehmbar ist, wenn ein solches empfangen wird, und am Ausgang des zweiten Betragsbildners (b2) das amplitudendemodulierte Audiosignal (aa) abnehmbar ist, wenn ein solches empfangen wird.

2. Fernsehempfangsteil nach Anspruch 1 mit einer Mischstufe (ms) zwischen dem Ausgang der Zwischenfrequenzstufe (z) und dem Eingang des A/D-Wandlers (aw), wobei der Mischstufe (ms) ein Mischsignal (tm) zugeführt ist, dessen Frequenz ein ganzzahliges Vielfaches der Frequenz des Taktsignals (t) ist.

3. Fernsehempfangsteil nach Anspruch 2 mit einem bandbegrenzten Ausgangssignal der Zwischenfrequenzstufe (z) und mit einem Tiefpaßfilter (tp) zwischen dem Ausgang der Mischstufe (ms) und dem Eingang des A/D-Wandlers (aw).

4. Fernsehempfangsteil nach Anspruch 2 oder 3 mit einem Rechtecksignal (tm′) als Mischsignal (tm) und mit Bildung des Taktsignals (t) aus dem Mischsignal (tm) durch ganzzahlige Frequenzteilung.

## Claims

1. A television receiving section comprising at least one interface between analog and digital stages and having the following features:
- A single interface (s) with a single A/D converter (aw) is provided which directly follows the output of the usual intermediate-frequency stage (z) of the television receiving section;
- the clock signal of the A/D converter (aw) has a frequency approximately equal to twice the bandwidth of the signal received by the television receiving section;
- the output of the A/D converter (aw) feeds an audio-information-processing channel (= audio channel) (ak) and a video-information-processing channel (= video channel) (vk),
characterized in that
- the video channel contains at its input end a band-pass filter (bp) whose passband extends between 1 MHz and 6 MHz and which feeds, on the one hand directly and on the other hand through a 90° phase shifter (ps), a first stage forming the absolute value of its two input signals (= first absolute-value stage) (b1), whose output provides the digital composite color signal (fb), and
- the audio channel (ak) contains at its input end a quadrature mixer (qm) in which the locally generated signals have the same, frequency-standard-dependent fixed frequency, which lies between 7 and 7.5 MHz, and each of whose two output signals is fed through a decimator (d1, d2) to one of the two inputs of a second stage producing an output, equal to the magnitude of its input signals (= second absolute-value stage) (b2) and to one of the two inputs of a stage computing the angle between its input signals (= angle-computing stage) (wb), with the output of the angle-computing stage (wb) delivering the frequency-demodulated audio signal (fa) through a differentiating stage (dt) when such a signal is being received, and the output of the second absolute-value stage (b2) delivering the amplitude-demodulated audio signal (aa) when such a signal is being received.

2. A television receiving section as claimed in claim 1 wherein a mixer stage (ms) is interposed between the output of the intermediate-frequency stage (z) and the input of the A/D converter (aw), with the mixer stage (ms) being fed by a locally generated signal (tm) whose frequency is an integral multiple of the frequency of the clock signal (t).

3. A television receiving section as claimed in claim 2 wherein the output of the intermediate-frequency stage (z) is a band-limited signal, and wherein a low-pass filter (tp) is interposed between the output of the mixer stage (ms) and the input of the A/D converter (aw).

4. A television receiving section as claimed in claim 2 or 3 wherein the locally generated signal (tm) is a square-wave signal (tm'), and wherein the clock signal (t) is derived from the locally generated signal (tm) by integral frequency division.

## Revendications

1. Partie d'un récepteur de télévision comportant au moins une interface entre des étages opérant analogiquement et numériquement, avec les caractéristiques suivantes :
- il est prévu une surface individuelle avec un convertisseur A/N individuel (aw), qui est agencé directement après la sortie de l'étage usuel de fréquence intermédiaire (z) de ladite partie du récepteur de télévision,
- le signal de synchronisation du convertisseur A/N (aw) a une fréquence qui est approximativement égale au double de la largeur de bande du signal reçu par la partie du récepteur de télévision,
- son signal de sortie alimente un canal de traitement des informations audio (= canal audio) (ak) et un canal de traitement des informations vidéo (canal vidéo) (vk),
caractérisée en ce que
- le canal vidéo contient côté entrée un filtre passe-bande (bp) dont la bande autorisée se situe entre 1 MHz et 6 MHz et qui alimente d'une part directement et d'autre part via un réseau déphaseur de 90° (ps) un premier étage faisant la somme de ses signaux d'entrée (= premier sommateur) (b1) à la sortie duquel apparaît le signal numérique FBAS (fb),
- le canal audio (ak) contient côté entrée un mélangeur en quadrature (qm), dans lequel les signaux mélangés ont la même fréquence fixe dépendant du standard du télévision qui se trouve entre 7 et 7,5 MHz et dans lequel chacun de leurs deux signaux de sortie sont acheminés via un décimeur (d1, d2) aux deux entrées d'un second étage faisant la somme de leurs signaux d'entrée (= second sommateur) (b2) et aux deux entrées d'un étage formant l'angle qui apparaît entre eux à partir de leurs signaux d'entrée (formateur d'angle) (wb), le signal audio (af) à fréquence démodulée pouvant être prélevé à la sortie du formateur d'angle (wb) via un étage de différenciation (dt) lorsqu'un tel signal est reçu et le signal audio à amplitude démodulée (aa) pouvant être prélevé à la sortie du second sommateur (b2) lorsqu'un tel signal est reçu.

2. Partie de récepteur de télévision selon la revendication 1 comportant un étage mélangeur (ms) entre la sortie de l'étage de fréquence intermédiaire (z) et l'entrée du convertisseur A/N (aw), l'étage mélangeur (ms) recevant un signal mélangé (tm) dont la fréquence est un multiple entier de la fréquence du signal de synchronisation (t).

3. Partie de récepteur de télévision selon la revendication 2 avec un signal de sortie à bande limitée de l'étage de fréquence intermédiaire (z) et un filtre passe-bas (tp) entre la sortie de l'étage mélangeur (ms) et l'entrée du convertisseur A/N.

4. Partie de récepteur de télévision selon la revendication 2 ou 3 avec un signal rectangulaire (tm') comme signal mixte (tm) et avec formation du signal de synchronisation (t) à partir du signal mixte (tm) par division de fréquence entière.
